# EUROPEAN PATENT APPLICATION

(11) **EP 4 654 237 A1**
(43) Date of publication of application: **26.11.2025**
(21) Application number: 25177596.1
(22) Date of filing: 20.05.2025
(51) Int. Cl.: H01H 3/00, H01H 3/32, H01H 3/46, H01H 3/54, H01H 1/50

(54) **DIRECT CURRENT SWITCH AND POWER CONVERTER**

(30) Priority: 21.05.2024 CN 202410637692
(71) Applicant: Huawei Digital Power Technologies Co., Ltd., Shenzhen, Guangdong 518043 (CN)
(72) Inventor: SUN, Jisheng, Shenzhen, 518043 (CN)
(74) Representative: Isarpatent

(57) **Abstract**

This application provides a direct current switch and a power converter including the direct current switch. The direct current switch includes an operating mechanism, a handle, and a disconnector. The operating mechanism includes an input shaft, an output shaft, and a connecting rod assembly, and the connecting rod assembly includes an input connecting rod and an output connecting rod. The disconnector includes a plurality of stacked sub-switches, and each sub-switch includes a movable contact and a stationary contact. The input shaft is fastened to the handle, the connecting rod assembly is configured to be in transmission connection to the input shaft and the output shaft, and the output shaft is configured to drive the movable contact to rotate. The handle is configured to drive the input shaft to rotate, and the input shaft is configured to drive the input connecting rod to rotate, so that the input connecting rod collides with the output connecting rod, and the output connecting rod drives the output shaft to rotate, to separate the movable contact from the stationary contact. In this way, when friction between the movable contact and the stationary contact increases, or when rust or adhesion occurs between the movable contact and the stationary contact, larger driving force can be provided for the movable contact, to reliably separate the movable contact from the stationary contact.

## Description

### TECHNICAL FIELD

This application relates to the field of power distribution technologies, and in particular, to an operating mechanism having a manual switch-off function, a direct current switch, and a power converter.

### BACKGROUND

In recent years, string inverters have become mainstream power conversion devices in the photovoltaic industry. To protect a photovoltaic string and a string inverter itself, a plurality of levels of disconnectors are usually integrated inside the string inverter, and each level of disconnector in the plurality of levels of disconnectors is configured to connect to at least one photovoltaic string. An inverter, especially an inverter used for a power station, is usually installed outdoors, and under comprehensive conditions such as a lightning strike, a high temperature, and high humidity, as a service life of the inverter is prolonged, a contact surface between a movable contact and a stationary contact in a plurality of levels of disconnectors inevitably ages. Therefore, when a photovoltaic string experiences a fault like overcurrent or a short circuit, reliable switch-off of the switch cannot be ensured. For this risk, the present invention provides a direct current switch having a manual switch-off function, to eliminate the foregoing safety risk.

### SUMMARY

According to a first aspect, this application provides a direct current switch, including an operating mechanism, a handle, and a disconnector. The operating mechanism includes an input shaft, an output shaft, and a connecting rod assembly, and the connecting rod assembly includes an input connecting rod and an output connecting rod. The disconnector includes a plurality of stacked sub-switches, and each sub-switch includes a movable contact and a stationary contact. The input shaft is fastened to the handle, the connecting rod assembly is configured to be in transmission connection to the input shaft and the output shaft, and the output shaft is configured to drive the movable contact to rotate. The handle is configured to drive the input shaft to rotate, and the input shaft is configured to drive the input connecting rod to rotate, so that the input connecting rod collides with the output connecting rod, and the output connecting rod drives the output shaft to rotate, to separate the movable contact from the stationary contact.

In this way, when friction between the movable contact and the stationary contact increases, or when rust or adhesion occurs between the movable contact and the stationary contact, larger driving force can be provided for the movable contact, to reliably separate the movable contact from the stationary contact. Therefore, a service life of the direct current switch is prolonged, and subsequent maintenance costs are reduced.

In a possible implementation, the input connecting rod is fastened to the input shaft, and the input connecting rod includes a through hole and a protrusion. The through hole is configured for the input shaft to penetrate; and the protrusion is disposed at an edge of the input connecting rod in a radial direction of the input shaft, and the protrusion is configured to collide with the output connecting rod. An independent input connecting rod is disposed, so that mutual interference between internal connecting rod components of the operating mechanism during operation of the operating mechanism can be avoided. This improves reliability of the direct current switch.

In a possible implementation, the connecting rod assembly includes a side plate, a first connecting rod, a second connecting rod, and a swing member. The first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate. The side plate, the first connecting rod, the second connecting rod, and the swing member form four connecting rods.

In a possible implementation, the connecting rod assembly further includes a spring, a first sliding rod, a cradle, and a releaser. One end of the spring is hung on the swing member, the other end of the spring is hung on the first sliding rod, the cradle is rotatably connected to the side plate, the cradle is further in transmission connection to the releaser, and the releaser is configured to release transmission connection to the cradle when receiving a switch-off signal, to separate the movable contact from the stationary contact. In this way, the direct current switch can have both a manual switch-off function and a trip-free function. The trip-free function means that even if the handle is stuck, after receiving the switch-off signal, the releaser can still reliably release the connecting rod in transmission connection to the output shaft like the cradle, to separate the movable contact from the stationary contact or keep the movable contact in a state in which the movable contact is separated from the stationary contact.

In a possible implementation, the connecting rod assembly further includes a third connecting rod, a fourth connecting rod, a fifth connecting rod, a second sliding rod, and a rotating plate. The third connecting rod is rotatably connected to the first sliding rod, the fourth connecting rod is rotatably connected to the first sliding rod and the cradle, the fifth connecting rod is rotatably connected to the third connecting rod, the second sliding rod penetrates the fifth connecting rod in an axial direction of the output shaft and is fastened to the fifth connecting rod, the second sliding rod is fastened to the rotating plate, and the rotating plate is fastened to the output shaft. When the releaser is in transmission connection to the cradle, that is, when the releaser does not release the cradle, the third connecting rod, the fourth connecting rod, the fifth connecting rod, and the side plate form four connecting rods. In addition, a distance between the protrusion of the input connecting rod and the input shaft is less than a distance between the second sliding rod and the input shaft. The output connecting rod extends in the axial direction of the output shaft and is fastened to the fifth connecting rod, and a distance between the output connecting rod and the input shaft is less than the distance between the second sliding rod and the input shaft. In this way, interference between the protrusion of the input connecting rod and the second sliding rod can be avoided, and it is ensured that the protrusion of the input connecting rod reliably collides with the output connecting rod, to drive the fifth connecting rod to move. As the fifth connecting rod moves, the second sliding rod also drives the output shaft to rotate, to separate the movable contact from the stationary contact.

In a possible implementation, the input connecting rod is a first connecting rod, and the connecting rod assembly further includes a side plate, a second connecting rod, and a swing member. The first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate. The first connecting rod includes a protrusion, and the protrusion is configured to: rotate around the input shaft and collide with the output connecting rod. In other words, a function of the input connecting rod is attached to the first connecting rod. In this way, the independent input connecting rod may not be disposed, thereby simplifying a process and reducing costs.

In a possible implementation, the input connecting rod is a swing member, and the connecting rod assembly further includes a side plate, a first connecting rod, and a second connecting rod. The first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate. The swing member includes a protrusion, and the protrusion is configured to: swing around a clamping position between the swing member and the side plate and collide with the output connecting rod. In other words, the function of the input connecting rod is attached to the swing member. In this way, the independent input connecting rod may not be disposed, thereby simplifying a process and reducing costs.

In a possible implementation, the connecting rod assembly further includes a spring, a first sliding rod, a cradle, and a releaser. One end of the spring is hung on the swing member, the other end of the spring is hung on the first sliding rod, the cradle is rotatably connected to the side plate, the cradle is in transmission connection to the releaser, and the releaser is configured to release transmission connection to the cradle when receiving a switch-off signal, to separate the movable contact from the stationary contact. In this way, a use habit of a user can be met, and it can be ensured that the drive mechanism has the trip-free function. The trip-free function means that even if the handle is stuck, after receiving the switch-off signal, the releaser can still reliably release the connecting rod in transmission connection to the output shaft like the cradle, to separate the movable contact from the stationary contact or keep the movable contact in the state in which the movable contact is separated from the stationary contact.

In a possible implementation, the connecting rod assembly further includes a third connecting rod, a fourth connecting rod, a fifth connecting rod, and a rotating plate, where the third connecting rod is rotatably connected to the first sliding rod, the fourth connecting rod is rotatably connected to the first sliding rod and the cradle, the fifth connecting rod is rotatably connected to the third connecting rod, the output connecting rod is a second sliding rod, the second sliding rod penetrates the fifth connecting rod in an axial direction of the output shaft and is fastened to the fifth connecting rod, the second sliding rod is fastened to the rotating plate, and the rotating plate is fastened to the second sliding rod and the output shaft. The third connecting rod, the fourth connecting rod, the fifth connecting rod, and the side plate form the four connecting rods. In this way, an independent output connecting rod may not be disposed, thereby simplifying the process and reducing the costs.

In a possible implementation, the connecting rod assembly further includes a third connecting rod, a fourth connecting rod, a fifth connecting rod, and a second sliding rod. The third connecting rod is rotatably connected to the first sliding rod, the fourth connecting rod is rotatably connected to the first sliding rod and the cradle, the fifth connecting rod is rotatably connected to the third connecting rod, the second sliding rod penetrates the fifth connecting rod in an axial direction of the output shaft and is fastened to the fifth connecting rod, the output connecting rod is a rotating plate, the rotating plate is fastened to the second sliding rod, and the rotating plate is fastened to the output shaft. The third connecting rod, the fourth connecting rod, the fifth connecting rod, and the side plate form the four connecting rods. In this way, the independent output connecting rod may not be disposed, thereby simplifying the process and reducing the costs.

In a possible implementation, the side plate includes an arc-shaped through hole, and the arc-shaped through hole is configured to accommodate a part of the second sliding rod, so that the second sliding rod slides in the arc-shaped through hole. In this way, sliding stability of the second sliding rod can be ensured, and transmission reliability of the connecting rod assembly can be improved.

In a possible implementation, the operating mechanism further includes a first unlocking rod and a second unlocking rod. The first unlocking rod is fastened to the releaser, the second unlocking rod is clamped to the first unlocking rod, the second unlocking rod is clamped to the cradle, and the releaser is configured to release the first unlocking rod when receiving the switch-off signal, to make the cradle move relative to the side plate and separate the movable contact from the stationary contact. In this way, the direct current switch can have the trip-free function, thereby improving safety and the reliability of the direct current switch.

In a possible implementation, in a process in which the handle drives the operating mechanism to separate the movable contact from the stationary contact, when the operating mechanism is in a dead point position, or after the operating mechanism crosses the dead point position, the input connecting rod is configured to collide with the output connecting rod. It should be noted that the process in which the handle drives, via the operating mechanism, the movable contact to be separated from the stationary contact may be divided into two phases by the dead point position. In the first phase, although the handle drives the input shaft to rotate, because the operating mechanism has not reached the dead point position, torque input by the handle cannot be transferred to the output shaft, and the movable contact cannot be separated from the stationary contact. When the operating mechanism reaches the dead point position, the torque input by the handle is just at a critical point of transferring the torque to the output shaft. When the operating mechanism crosses the dead point position for switch-off, that is, in the second phase, even if the handle no longer inputs torque to the operating mechanism, the movable contact can be separated from the stationary contact. The input connecting rod collides with the output connecting rod prematurely and pushes the output shaft to rotate due to a misoperation (after the operating mechanism is in a switch-on state, a position in which the operating mechanism is in a switch-off state is moved by a specific angle by rotating the handle) in actual application, and consequently, a contact area between the movable contact and the stationary contact is reduced, and a contact resistance between movable contact and the stationary contact is increased. Therefore, to avoid this case, the input connecting rod collides with the output connecting rod only when the operating mechanism is in the dead point position for switch-off, or when the operating mechanism crosses the dead point position for switch-off. In other words, the input connecting rod collides with the output connecting rod only when there is no misoperation, to increase the driving force for the movable contact, and effectively separate the movable contact from the stationary contact.

In a possible implementation, the input shaft and the output shaft are coaxial. In this way, a volume of the operating mechanism can be reduced, so that the operating mechanism better adapts to an internal space arrangement of a power converter.

In a possible implementation, in the process in which the handle drives, via the operating mechanism, the movable contact to be separated from the stationary contact, a rotation angle of the output shaft is 90°. In this way, a separation distance between the movable contact and the stationary contact can be increased, thereby reducing damage caused by an electric arc to the disconnector.

In a possible implementation, in the process in which the handle separates the movable contact from the stationary contact by driving the operating mechanism, a rotation angle of the input shaft is 90°, and a rotation angle of the swing member is between 30° to 40°. In this way, it can be ensured that the rotation angle of the swing member is less than a rotation angle of the handle, and this conforms to the use habit of the user (the handle rotates by 90°).

In a possible implementation, there are two side plates. In this way, stable transmission of the connecting rod assembly in the operating mechanism can be ensured, and operation stability of the direct current switch can be improved.

According to a second aspect, this application provides a power converter, including the direct current switch according to any one of the first aspect, a housing, and a circuit board. The housing is configured to accommodate the circuit board and a part of the direct current switch. The direct current switch is disposed on the circuit board, and a handle of the direct current switch is exposed from the housing. Based on this, even if a movable contact and a stationary contact of the direct current switch inside the power converter are rusty as use time of the power converter is prolonged, separation between the movable contact and the stationary contact can be reliably driven via the handle, thereby prolonging a service life of the power converter and improving safety of the power converter.

In general, the operating mechanism provided in this application can provide larger driving force for the output shaft when static friction between the movable contact and the stationary contact increases and it is difficult to ensure effective separation between the movable contact and the stationary contact by using the torque input by the handle, to effectively separate the movable contact from the stationary contact.

### BRIEF DESCRIPTION OF DRAWINGS

FIG. 1 is a networking diagram of a photovoltaic power supply system;
FIG. 2 is a diagram of a simplified structure of a power converter;
FIG. 3 is a diagram of a structure of a direct current switch according to this application;
FIG. 4 is a diagram of structures of sub-switches in a direct current switch according to this application;
FIG. 5 is a diagram of structures of a handle and an operating mechanism in a direct current switch according to this application;
FIG. 6 is a first diagram of a structure of a connecting rod assembly in an operating mechanism according to this application;
FIG. 7 is a second diagram of a structure of a connecting rod assembly in an operating mechanism according to this application;
FIG. 8 is a diagram of a partial structure of a connecting rod assembly in an operating mechanism according to this application;
FIG. 9 is a diagram of a structure of an input connecting rod in an operating mechanism according to this application;
FIG. 10 is a third diagram of a structure of a connecting rod assembly in an operating mechanism according to this application;
FIG. 11 is a diagram of a structure of a connecting rod assembly in the operating mechanism in FIG. 6, FIG. 7, or FIG. 10 in a switch-off state according to this application;
FIG. 12 is a diagram of a structure of a connecting rod assembly in the operating mechanism in FIG. 6, FIG. 7, or FIG. 10 in a switch-on state according to this application;
FIG. 13 is a diagram of a structure of a connecting rod assembly present after the operating mechanism in FIG. 6, FIG. 7, or FIG. 10 crosses a dead point position according to this application;
FIG. 14 is another diagram of a structure of a connecting rod assembly in an operating mechanism in a switch-on state according to this application;
FIG. 15 is still another diagram of a structure of a connecting rod assembly in a state in which an operating mechanism crosses a dead point for switch-off according to this application; and
FIG. 16 is yet another diagram of a structure of a connecting rod assembly in an operating mechanism according to this application.

### DESCRIPTION OF EMBODIMENTS

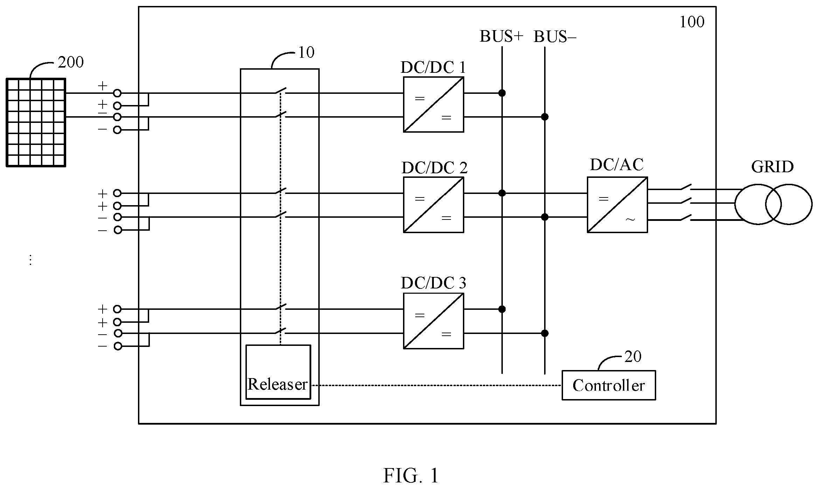

FIG. 1 is a networking diagram of a photovoltaic power supply system. The photovoltaic power supply system includes a power converter 100 and photovoltaic modules 200. The power converter 100 is configured to convert a direct current from the photovoltaic module 200 into an alternating current, and transmit the alternating current to a grid or a load (not shown). Specifically, the power converter 100 includes a plurality of direct current terminals, a direct current switch 10, direct current/direct current (DC/DC) circuits, a direct current bus BUS+ and a BUS-, a direct current/alternating current (DC/AC) circuit, a switch at a point of interconnection, and a controller 20. In an actual application scenario, the photovoltaic module 200 is connected to the direct current terminal, to transmit a direct current to the DC/DC circuit via the direct current switch 10. The DC/DC circuit transmits a direct current obtained through voltage transformation to the DC/AC circuit via the direct current bus, and the DC/AC circuit converts the direct current into an alternating current, and transmits the alternating current to the grid or the load via the switch at the point of interconnection. Further, the direct current switch 10 includes a plurality of sub-switches and a releaser. One end of each sub-switch is configured to connect to one or more photovoltaic strings connected in parallel, and one photovoltaic string includes a plurality of photovoltaic modules 200 connected in series. The other end of each sub-switch is configured to connect to the DC/DC circuit. The releaser is configured to receive a switch-off signal from the controller 20, so that when a current flowing through the sub-switch is abnormal, the direct current switch 10 is switched off in time, to rectify the fault. For example, when a value of a current flowing through at least one sub-switch of the direct current switch 10 exceeds a specified threshold, or when a current flowing through at least one sub-switch of the direct current switch 10 is a reverse current, the controller 20 is configured to send the switch-off signal to the releaser, and the releaser further releases a corresponding connecting rod structure in time, to implement reliable switch-off of the at least one sub-switch. In actual application, because the plurality of sub-switches are disposed in linkage, the plurality of sub-switches are usually switched on or switched off simultaneously. It should be noted that, when the photovoltaic power supply system operates normally, a current between the photovoltaic string and the power converter 100 is a forward current, and a flow direction of the forward current is from the photovoltaic module 200 to the DC/DC circuit. When the photovoltaic string is reversely connected or a short-circuit fault occurs in the photovoltaic string, a reverse current occurs in the photovoltaic power supply system, and a flow direction of the reverse current is from the DC/DC circuit to a photovoltaic panel, or is from another photovoltaic string connected in parallel to the reversely connected photovoltaic string or the short-circuited photovoltaic string to the reversely connected photovoltaic string or the short-circuited photovoltaic string. For example, when a positive terminal corresponding to the photovoltaic string is connected to a negative terminal of the direct current terminal, and a negative terminal corresponding to the photovoltaic string is connected to a positive terminal of the direct current terminal, in other words, when the photovoltaic string is reversely connected, or when one photovoltaic string is short-circuited, an equivalent impedance of either of the two photovoltaic strings is far lower than an equivalent impedance of the power converter 100. Therefore, a current of another photovoltaic string connected in parallel to the two photovoltaic strings is directly injected into the two photovoltaic strings, and a current on a sub-switch connected to either of the two photovoltaic strings is a reverse current.

It should be noted that the power converter 100 may be a photovoltaic inverter, or may be a power conversion system (PCS). Different from the photovoltaic inverter, a direct current terminal of the power conversion system may not only be connected to the photovoltaic module 200, but also be connected to an energy storage battery. Based on this, the power conversion system can not only convert a direct current from the photovoltaic module 200 or the energy storage battery into an alternating current, but also rectify an alternating current from the grid into a direct current to charge the energy storage battery, thereby improving energy utilization efficiency of the power supply system.

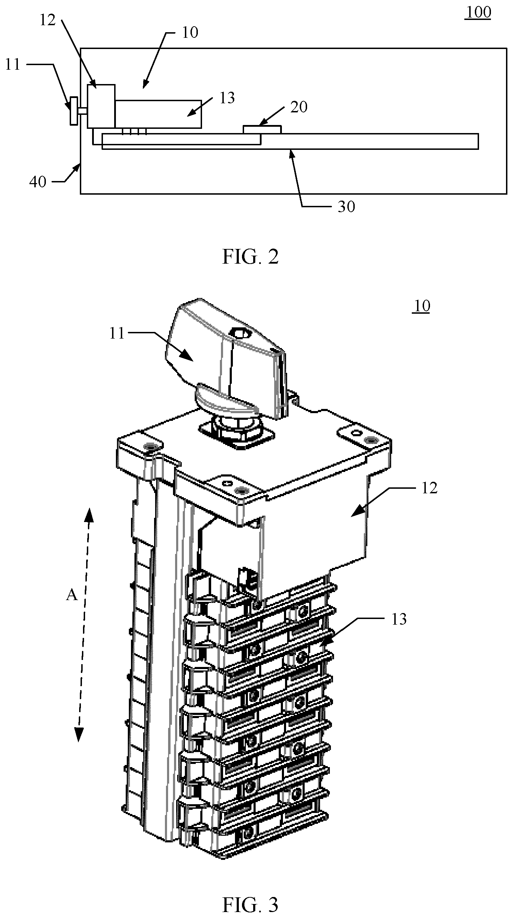

FIG. 2 is a diagram of a simplified structure of the power converter 100. Specifically, a circuit board 30 and the controller 20 fastened to the circuit board 30 are accommodated in accommodating space enclosed by a housing 40, and the direct current switch 10 is also fastened to the circuit board 30 and partially accommodated in the housing 40. Specifically, the direct current switch 10 includes a handle 11, an operating mechanism 12, and a disconnector 13. The handle 11 is exposed from the housing 40, and the operating mechanism 12 and the disconnector 13 are located in the housing 40. In actual application, a user may drive, by rotating the handle 11, a connecting rod mechanism included in the operating mechanism 12 to operate, to drive a plurality of sub-switches included in the disconnector 13 to be switched on or switched off.

FIG. 3 is a diagram of a structure of the direct current switch 10. In FIG. 3, the handle 11, the operating mechanism 12, and the disconnector 13 are sequentially stacked in a first direction A. The disconnector 13 includes the plurality of stacked sub-switches.

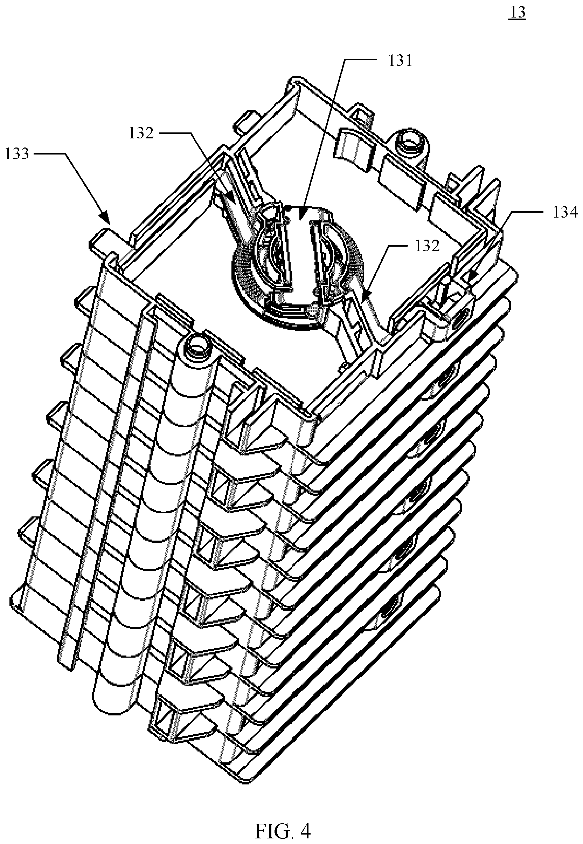

FIG. 4 is a diagram of structures of the sub-switches in the disconnector 13. In FIG. 4, each sub-switch includes a movable contact 131 in a shape similar to "Z", two stationary contacts 132, a connecting part 134, and a fastening part 133. Specifically, the movable contact 131 includes a plurality of stacked metal sheets, and each of two end parts of the movable contact 131 that extend in opposite directions includes one bayonet. In a manual switch-on process, the rotating handle 11 drives, via the operating mechanism 12, the movable contact 131 to rotate. When the movable contact 131 rotates by a proper angle (for example, 90°), two ends of the movable contact 131 clamp the stationary contacts 132 via the bayonets, to implement conductive contact between the movable contact 131 and the stationary contact 132. In actual application, the connecting part 134 is configured to connect the photovoltaic module 200 to one stationary contact 132, one end of the fastening part 133 is connected to the other stationary contact 132, and the other end of the fastening part 133 is conductively connected to the circuit board 30. Based on this, when the connecting part 134 is connected to the photovoltaic module 200, the photovoltaic module 200 may be controlled to be conductively connected to or disconnected from the power converter 100 by rotating the handle 11.

In the conventional technology, as a service life of the power converter 100 is prolonged, rust inevitably occurs between the bayonet at each of the two ends of the movable contact 131 and the stationary contact 132. As a result, static friction between the movable contact 131 and the stationary contact 132 increases, and when the direct current switch 10 is switched off, torque input by the handle 11 cannot ensure effective separation between the movable contact 131 and the stationary contact 132. This affects safe operation of a photovoltaic power station. Based on this, this application provides a direct current switch 10 having a manual switch-off function, to effectively separate the movable contact 131 from the stationary contact 132, thereby prolonging a service life of the direct current switch 10 and improving safety of the direct current switch 10.

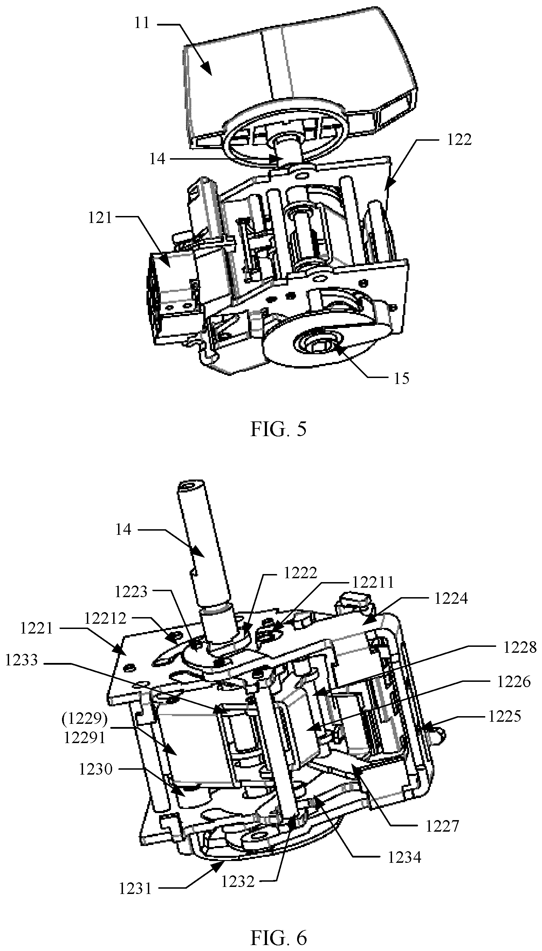

FIG. 5 is a diagram of structures of the handle 11 and the operating mechanism 12 in the direct current switch according to this application. In FIG. 5, the handle 11 is in transmission connection to the operating mechanism 12 via an input shaft 14. The operating mechanism 12 includes a connecting rod assembly 122. The connecting rod assembly 122 transfers, through transmission of an internal connecting rod of the connecting rod assembly 122, the torque input by the handle 11 to an output shaft 15, to implement rotation of the output shaft 15. The output shaft 15 is further configured to drive the movable contact 131 to rotate. The output shaft 15 includes a groove, the groove is configured to connect to a rotating shaft (not shown) of the disconnector 13, and the rotating shaft of the disconnector 13 is configured to drive the movable contact 131 to rotate. For example, when the handle 11 rotates by 90°, the output shaft 15 also rotates by 90°, to make the movable contact 131 rotate by 90°. In addition, the operating mechanism 12 further includes a releaser 121, and the releaser 121 is configured to receive the switch-off signal from the controller 20. For example, when overcurrent occurs in a current flowing through the direct current switch 10, or when a current flowing through the direct current switch 10 is a reverse current, to rectify the fault in time, the controller 20 sends the switch-off signal to the releaser 121, and then the releaser 121 releases a connecting rod in transmission connection to the releaser 121, and further makes the corresponding connecting rod in the connecting rod assembly 122 move, to separate the movable contact 131 from the stationary contact 132. It should be noted that, even if the handle 11 is stuck, the releaser 121 can still independently separate the movable contact 131 from the stationary contact 132, or keep the movable contact 131 in a state in which the movable contact 131 is separated from the stationary contact 132. This function is referred to as free tripping. In addition, in the direct current switch 10, the input shaft 14 and the output shaft 15 are coaxial, and both extend in the first direction A. In this way, a volume of the operating mechanism 12 can be reduced, and a volume density of the power converter 100 can be increased.

FIG. 6 is a first diagram of a structure of the connecting rod assembly 122 in the operating mechanism 12. In FIG. 6, the connecting rod assembly 122 includes two side plates 1221 disposed opposite to each other in the first direction A. The two side plates 1221 are fastened to each other via a plurality of positioning pillars 1232 to form accommodating space. The input shaft 14 sequentially penetrates the two side plates 1221 and is partially located in the accommodating space. Further, the connecting rod assembly 122 further includes a first connecting rod 1222, a second connecting rod 1223, and a swing member 1224, and the three are all located outside the accommodating space. One end of the first connecting rod 1222 is connected to the input shaft 14, the other end of the first connecting rod 1222 is rotatably connected to one end of the second connecting rod 1223, and the other end of the second connecting rod 1223 is rotatably connected to the swing member 1224. In addition, the side plate 1221 further includes a protrusion 12211, the swing member 1224 further includes a bayonet, and the bayonet is clamped to the protrusion 12211. The first connecting rod 1222, the second connecting rod 1223, the swing member 1224, and the side plate 1221 form four connecting rods. When the handle 11 drives the input shaft 14 to rotate (for example, rotate by 90°), the input shaft 14 sequentially drives the first connecting rod 1222 and the second connecting rod 1223 to move, the second connecting rod 1223 further drives the swing member 1224 to swing with the protrusion 12211 as a circle center (for example, swing by 30° to 40°). To ensure transmission stability, for example, there may be two first connecting rods 1222 and two second connecting rods 1223 in the connecting rod assembly 122. In the first direction A, the two first connecting rods 1222 are disposed opposite to each other, and the two second connecting rods 1223 are also disposed opposite to each other. To connect to the two second connecting rods 1223 that are disposed opposite to each other, the swing member 1224 includes two connecting arms that are disposed opposite to each other in the first direction A and a connecting part configured to connect the two connecting arms. The two connecting arms and the connecting part form a structure in a shape similar to "U". In actual application, a manner of clamping the side plate 1221 to the swing member 1224 is not limited in this application, provided that the swing member 1224 can stably rotate relative to the side plate 1221 by a specific angle. For example, an arc-shaped groove may be further disposed on the side plate 1221, and the connecting arms are clamped into the arc-shaped groove, so that the swing member 1224 can rotate relative to the side plate 1221.

Further, the connecting rod assembly 122 further includes a third connecting rod 1226, a fourth connecting rod 1227, a fifth connecting rod 1229, a first sliding rod 1228, a cradle 1234, and a spring (not shown). The third connecting rod 1226, the fourth connecting rod 1227, the fifth connecting rod 1229, the first sliding rod 1228, and the cradle 1234 are all located in the accommodating space. One end of the spring is hung in a mounting hole 1225 located at the connecting part, and the other end of the spring is hung on the first sliding rod 1228 extending in the first direction A. One end of the third connecting rod 1226 and one end of the fourth connecting rod 1227 are both rotatably connected to the first sliding rod 1228, the other end of the third connecting rod 1226 is rotatably connected to one end of the fifth connecting rod 1229, and the other end of the fourth connecting rod 1227 is rotatably connected to the cradle 1234. When the swing member 1224 swings with the protrusion as the circle center, the swing member 1224 drives, via the spring, the first sliding rod 1228 to slide in the accommodating space, and further drives the third connecting rod 1226, the fourth connecting rod 1227, and the fifth connecting rod 1229 to move.

It should be noted that the cradle 1234 is rotatably connected to the side plates 1221. When the releaser 121 does not operate, a position of the cradle 1234 relative to the side plates 1221 remains unchanged, and the third connecting rod 1226, the fourth connecting rod 1227, the fifth connecting rod 1229, and the side plate 1221 form four connecting rods. When the releaser 121 receives the switch-off signal from the controller 20, the releaser 121 releases the corresponding connecting rod (including the cradle 1234), and further makes the cradle 1234, the third connecting rod 1226, the fourth connecting rod 1227, and the fifth connecting rod 1229 move, and the third connecting rod 1226, the fourth connecting rod 1227, the fifth connecting rod 1229, the cradle 1234, and the side plate 1221 form five connecting rods, to implement free tripping. Details are described below.

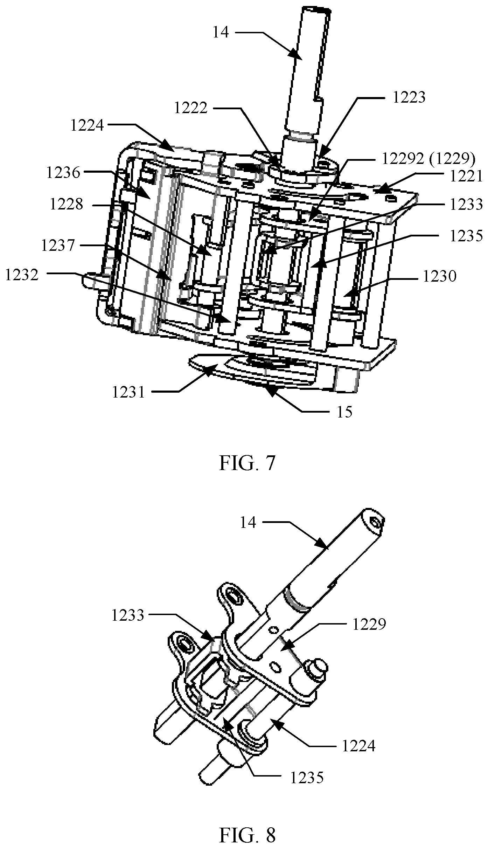

Refer to both FIG. 6 and FIG. 7. FIG. 7 is a second diagram of a structure of the connecting rod assembly 122 in the operating mechanism 12. The fifth connecting rod 1229 includes two mounting plates disposed opposite to each other in the first direction A and a connecting plate configured to connect the two mounting plates. In this way, transmission stability and uniformity can be ensured. The connecting rod assembly 122 further includes a second sliding rod 1230, and the second sliding rod 1230 penetrates and is fastened to the fifth connecting rod 1229 in the first direction A. When the fifth connecting rod 1229 moves, the second sliding rod 1230 also moves accordingly. Further, the side plate 1221 further includes an arc-shaped through hole 12212, and the arc-shaped through hole 12212 is configured to accommodate a part of the second sliding rod 1230, so that the second sliding rod 1230 slides in the arc-shaped through hole 12212, and stability of a sliding trajectory of the second sliding rod 1230 is ensured. Further, in the first direction A, one end that is of the second sliding rod 1230 and that is away from the handle 11 is further fastened to a rotating plate 1231, a center of the rotating plate 1231 is fastened to the output shaft 15, and the output shaft 15 is configured to drive the movable contact 131 to rotate. For example, in a process in which the operating mechanism 12 drives the movable contact 131 to be separated from the stationary contact 132, a rotation angle of the second sliding rod 1230 around the input shaft 14 is 90°, the rotating plate 1231 also rotates 90° under driving of the second sliding rod 1230, and finally, the output shaft 15 drives the movable contact 131 to rotate by 90°. When the output shaft 15 rotates by 90°, the movable contact 131 also rotates by 90°. In this way, a distance between the movable contact 131 and the stationary contact 132 can be increased, thereby reducing damage, to the disconnector 13, caused by an electric arc generated in a case in which the movable contact 131 and the stationary contact 132 are separated.

It should be noted that the rotating plate 1231 in FIG. 6 is in a shape of a circular plate. In actual application, a specific shape of the rotating plate 1231 is not limited, provided that the rotating plate 1231 can stably connect to the output shaft 15 and the second sliding rod 1230.

In general, when the releaser 121 does not operate, the first connecting rod 1222, the second connecting rod 1223, the swing member 1224, and the side plate 1221 form the four connecting rods, and the side plate 1221, the third connecting rod 1226, the fourth connecting rod 1227, and the fifth connecting rod 1229 form the four connecting rods. The two sets of four connecting rods are transmitted by the spring, to transfer the torque input by the handle 11 to the output shaft 15.

FIG. 8 is a diagram of a partial structure of the connecting rod assembly 122 in the operating mechanism 12. In FIG. 8, the connecting rod assembly 122 further includes an input connecting rod 1233 and an output connecting rod 1235. The input connecting rod 1233 is fastened to the input shaft 14, and the output connecting rod 1235 penetrates the fifth connecting rod 1229 and is fastened to the fifth connecting rod 1229. In addition, the fifth connecting rod 1229 further includes a hollow region, and the hollow region is used to enable the input shaft 14 to penetrate the fifth connecting rod 1229. In FIG. 8, the hollow region is a circle, and a diameter of the hollow region is greater than a diameter of the input shaft. In other words, although the input shaft 14 penetrates the two mounting plates of the fifth connecting rod 1229, the fifth connecting rod 1229 is not in contact with the input shaft 14. In actual application, a shape of the hollow region is not limited. When the handle 11 drives the input shaft 14 to rotate, the input connecting rod 1233 also rotates with the input shaft 14. When the fifth connecting rod 1229 moves, the output connecting rod 1235 also moves with the fifth connecting rod 1229.

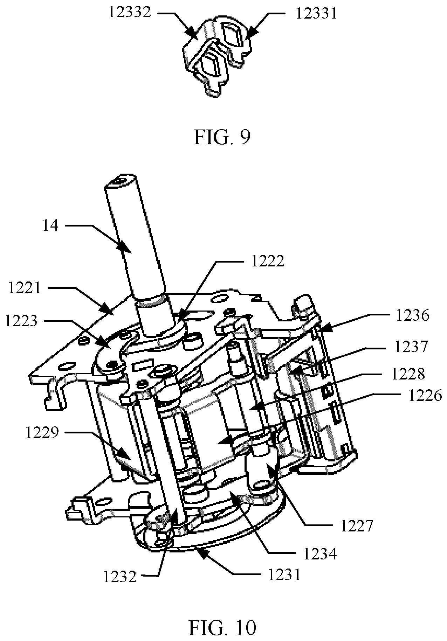

FIG. 9 is a diagram of a structure of the input connecting rod 1233 in the operating mechanism 12. In FIG. 9, the input connecting rod 1233 includes a through hole and a protrusion. The through hole is located in the middle of two sheet-shaped strike parts 12331, the through hole is configured for the input shaft 14 to penetrate, and the protrusion is disposed at an edge of the strike part 12331 in a radial direction of the input shaft 14. When the torque input by the handle 11 cannot ensure effective separation between the movable contact 131 and the stationary contact 132 (for example, there is slight fusion welding or rust between the movable contact 131 and the stationary contact 132), the protrusion is configured to collide with the output connecting rod 1235. The output connecting rod 1235 is fastened to the fifth connecting rod 1229, and the second sliding rod 1230 fastened to the fifth connecting rod 1229 is fastened to the output shaft 15 via the rotating plate 1231. Therefore, when the protrusion of the input connecting rod 1233 collides with the output connecting rod 1235, driving force for the output shaft 15 can be enhanced, to effectively separate the movable contact 131 from the stationary contact 132. To ensure rotation stability of the strike part 12331, the input connecting rod 1233 includes the two strike parts 12331 disposed opposite to each other in the first direction A and a connecting piece 12332 configured to connect the two strike parts 12331. In actual application, the output connecting rod 1235 may alternatively be disposed to be block-shaped. In other words, there is no gap between the two sheet-shaped strike parts 12331, and the two sheet-shaped strike parts 12331 and the connecting piece 12332 are directly integrated into a whole. A specific form is not limited. It should be noted that, in this embodiment, the protrusion of the input connecting rod 1233 may alternatively be a structure with edges and corners on the strike part 12331, that is, when an outline of projection of the strike part 12331 in an axial direction of the input shaft 14 is the structure with edges and corners like a rectangle or a square, the strike part 12331 may also effectively interfere with the output connecting rod 1235. In this way, as the input shaft rotates, the strike part 12331 may also interfere with the output connecting rod 1235, to increase driving force for the movable contact 131, and effectively separate the movable contact 131 from the stationary contact 132.

With reference to FIG. 8 and FIG. 9, a distance between the protrusion of the input connecting rod 1233 and the input shaft 14 is less than a distance between the second sliding rod 1230 and the input shaft 14, and a distance between the output connecting rod 1235 and the input shaft 14 is also less than the distance between the second sliding rod 1230 and the input shaft 14. In this way, interference between the protrusion of the input connecting rod 1233 and the second sliding rod 1230 can be avoided, and it is ensured that the protrusion of the input connecting rod 1233 can collide with the output connecting rod 1235, to drive the fifth connecting rod 1229 to move. As the fifth connecting rod 1229 moves, the second sliding rod 1230 also drives the output shaft 15 to rotate.

FIG. 10 is a third diagram of a structure of the connecting rod assembly 122 in the operating mechanism 12. In FIG. 10, the connecting rod assembly 122 further includes a first unlocking rod 1236 and a second unlocking rod 1237. One end of the first unlocking rod 1236 is connected to the releaser 121, the other end of the first unlocking rod 1236 is clamped to one end of the second unlocking rod 1237, and the other end of the second unlocking rod 1237 is configured to be clamped to the cradle 1234. When the releaser 121 receives the switch-off signal from the controller 20, the releaser 121 pushes the first unlocking rod 1236, so that the first unlocking rod 1236 releases the second unlocking rod 1237. Then, the cradle 1234, the fourth connecting rod 1227, the third connecting rod 1226, and the fifth connecting rod 1229 all move, and the third connecting rod 1226, the fourth connecting rod 1227, the fifth connecting rod 1229, the cradle 1234, and the side plate 1221 form the five connecting rods, so that the output shaft 15 rotates, to separate the movable contact 131 from the stationary contact 132.

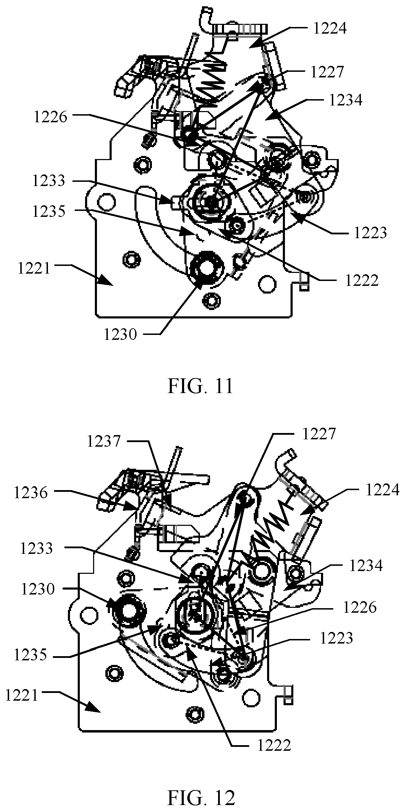

FIG. 11 is a diagram of a partial structure of the connecting rod assembly 122 in the operating mechanism 12 in FIG. 6, FIG. 7, or FIG. 10 in a switch-off state (in this case, the movable contact 131 is separated from the stationary contact 132). In FIG. 11, the four connecting rods formed by the third connecting rod 1226, the fourth connecting rod 1227, the fifth connecting rod, and the side plate 1221 are indicated by solid lines, and the four connecting rods formed by the first connecting rod 1222, the second connecting rod 1223, the swing member 1224, and the side plate 1221 are indicated by dashed lines. In addition, the protrusion of the input connecting rod 1233 and the output connecting rod 1235 are staggered by a specific angle (about 90°) relative to the input shaft 14.

FIG. 12 is a diagram of a partial structure of the connecting rod assembly 122 in the operating mechanism 12 in FIG. 6, FIG. 7, or FIG. 10 in a switch-on state (in this case, the movable contact 131 is in contact with the stationary contact 132). In FIG. 12, the four connecting rods formed by the third connecting rod 1226, the fourth connecting rod 1227, the fifth connecting rod, and the side plate 1221 are indicated by solid lines, and the four connecting rods formed by the first connecting rod 1222, the second connecting rod 1223, the swing member 1224, and the side plate 1221 are indicated by dashed lines. In addition, the protrusion of the input connecting rod 1233 and the output connecting rod 1235 are staggered by a specific angle relative to the input shaft 14.

With reference to FIG. 11 and FIG. 12, in the process in which the handle 11 drives, via the operating mechanism 12, the movable contact 131 to be in contact with the stationary contact 132, the torque input by the handle 11 is sequentially transferred to the swing member 1224 via the first connecting rod 1222 and the second connecting rod 1223, so that the swing member 1224 rotates clockwise (for example, 30° to 40°) relative to the side plates 1221. When the swing member 1224 rotates, the third connecting rod 1226, the fourth connecting rod 1227, and the fifth connecting rod 1229 are driven to move via the spring, so that the second sliding rod 1230 drives the output shaft 15 to rotate (for example, 90°), and the movable contact 131 is in conductive contact with the stationary contact 132. In addition, in a process in which the handle 11 drives, via the operating mechanism 12, the movable contact 131 to be in contact with the stationary contact 132, the input connecting rod 1233 rotates clockwise (for example, 90°) with the input shaft 14, and the output connecting rod 1235 also rotates clockwise (for example, 90°) around the input shaft 14 with the fifth connecting rod 1229. In a process in which the handle 11 drives, via the operating mechanism 12, the movable contact 131 and the stationary contact 132 to change from separation to contact, on one hand, the input connecting rod 1233 and the output connecting rod 1235 are staggered by a specific angle relative to the input shaft 14, and on the other hand, because both the input connecting rod 1233 and the output connecting rod 1235 rotate clockwise around the input shaft 14 at a same rotation angle, there is no interference between the output connecting rod 1235 and the input connecting rod 1233, so that reliable switch-on of the direct current switch 10 can be implemented.

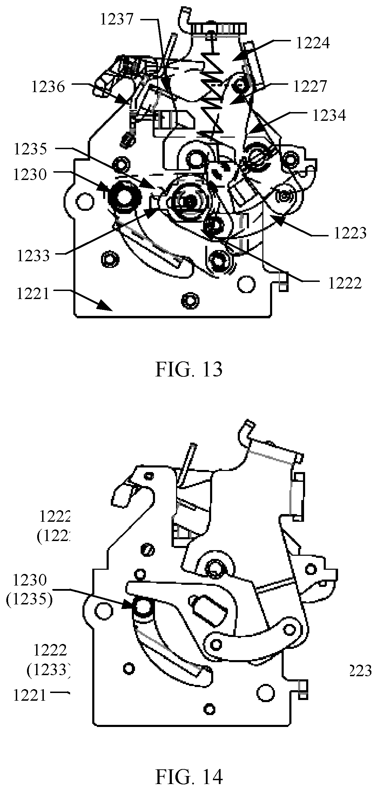

As described above, for the existing direct current switch, when there is slight fusion welding or rust between the movable contact 131 and the stationary contact 132, the static friction between the movable contact 131 and the stationary contact 132 increases, and in the process in which the handle 11 drives, via the operating mechanism 12, the movable contact 131 to be separated from the stationary contact 132, the torque input by the handle 11 cannot implement smooth separation between the movable contact 131 and the stationary contact 132. Therefore, due to existence of the input connecting rod 1233 and the output connecting rod 1235, the operating mechanism 12 provided in this application can be configured to reliably separate the movable contact 131 from the stationary contact 132 when there is slight fusion welding or rust between the movable contact 131 and the stationary contact 132. The following describes a switch-off principle of the direct current switch 10 in this application with reference to FIG. 12 and FIG. 13.

FIG. 13 is a diagram of a structure of the connecting rod assembly 122 present in the process in which the operating mechanism 12 in FIG. 6, FIG. 7, or FIG. 10 drives the movable contact 131 to be separated from the stationary contact 132 and after the operating mechanism 12 crosses a dead point position. With reference to FIG. 12 and FIG. 13, in the process in which the operating mechanism 12 drives the movable contact 131 to be separated from the stationary contact 132, the torque input by the handle 11 is transferred to the swing member 1224 via the first connecting rod 1222 and the second connecting rod 1223, so that the swing member 1224 rotates counterclockwise relative to the side plates 1221. In addition, as the input shaft 14 rotates, the protrusion of the input connecting rod 1233 also rotates counterclockwise. When the operating mechanism 12 is in the dead point position, or after the operating mechanism 12 crosses the dead point position, the protrusion of the input connecting rod 1233 collides with the output connecting rod 1235, to increase driving force for the fifth connecting rod 1229, so that the fifth connecting rod 1229 moves. As the fifth connecting rod 1229 moves, the output shaft 15 also rotates synchronously. In the process in which the operating mechanism 12 drives the movable contact 131 to be separated from the stationary contact 132, the dead point position is a relative position of the connecting rod assembly 122 in the operating mechanism 12 in a case in which the swing member 1224 and the fourth connecting rod 1227 are collinear.

It should be noted that the dead point position is a demarcation point that determines whether the operating mechanism 12 can drive the movable contact 131 to be separated from the stationary contact 132. When the operating mechanism 12 is located before the dead point position for switch-off, the third connecting rod 1226, the fourth connecting rod 1227, the fifth connecting rod 1229, the output connecting rod 1235, and the second sliding rod 1230 all remain stationary, and the torque input by the handle 11 cannot drive the output shaft 15 to rotate. After the operating mechanism 12 is located after the dead point position for switch-off, the third connecting rod 1226, the fourth connecting rod 1227, the fifth connecting rod 1229, the output connecting rod 1235, and the second sliding rod 1230 move, and the output shaft 15 rotates.

Based on this, the protrusion of the input connecting rod 1233 collides with the output connecting rod 1235 only when the operating mechanism 12 is in the dead point position or located after the dead point position. This can avoid the following problem: The output shaft 15 is driven to rotate due to a misoperation (after the operating mechanism 12 is in the switch-on state, a position in which the operating mechanism 12 is in the switch-off state is moved by a specific angle by rotating the handle 11) in actual operation application; consequently, a contact area between the movable contact 131 and the stationary contact 132 is reduced, and a contact resistance between the movable contact 131 and the stationary contact 132 is increased. In other words, the protrusion of the input connecting rod 1233 collides with the output connecting rod 1235 only when the operating mechanism 12 is in the dead point position or located after the dead point position, that is, when there is no misoperation, to increase the driving force for the movable contact 131, and effectively separate the movable contact 131 from the stationary contact 132.

In addition to the independent input connecting rod 1233 and the independent output connecting rod 1235, the functions of the input connecting rod 1233 and the output connecting rod 1235 may be further attached to another connecting rod of the connecting rod assembly 122.

FIG. 14 is another diagram of a partial structure of the connecting rod assembly 122 obtained when the operating mechanism 12 is in the dead point position or after the operating mechanism 12 crosses the dead point position (in this case, the movable contact 131 is in contact with the stationary contact 132) according to this application. Different from the structures shown in FIG. 6, FIG. 7, and FIG. 10, the operating mechanism 12 shown in FIG. 14 is not provided with the independent input connecting rod 1233 and the independent output connecting rod 1235, but changes some original connecting rods in the connecting rod assembly 122. The input connecting rod 1233 is the first connecting rod 1222, and the output connecting rod 1235 is the second sliding rod 1230. Specifically, the first connecting rod 1222 includes a protrusion 12221, and the protrusion 12221 is disposed parallel to the side plate 1221. In the process in which the operating mechanism 12 drives the movable contact 131 to be separated from the stationary contact 132, the protrusion 12221 of the first connecting rod 1222 rotates counterclockwise. When the operating mechanism 12 is in the dead point position, or after the operating mechanism 12 crosses the dead point position, the protrusion 12221 of the first connecting rod 1222 collides with the second sliding rod 1230, to increase driving force for the second sliding rod 1230, so that the second sliding rod 1230 moves. As the second sliding rod 1230 moves, the output shaft 15 also rotates synchronously, to separate the movable contact 131 from the stationary contact 132. This can avoid the following problem: The output shaft 15 is driven to rotate due to a misoperation (after the operating mechanism 12 is in the switch-on state, a position in which the operating mechanism 12 is in the switch-off state is moved by a specific angle by rotating the handle 11) in actual operation application; consequently, a contact area between the movable contact 131 and the stationary contact 132 is reduced, and a contact resistance between the movable contact 131 and the stationary contact 132 is increased. It should be noted that the connecting rod assembly 122 shown in FIG. 14 includes all the connecting rods other than the independent input connecting rod 1233 and the independent output connecting rod 1235 in the connecting rod assembly 122 shown in FIG. 6, FIG. 7, and FIG. 10, and transmission principles of these connecting rods remain unchanged. In addition, in the process in which the operating mechanism 12 drives the movable contact 131 to be separated from the stationary contact 132, the dead point position is a relative position of the connecting rod assembly 122 in the operating mechanism 12 in a case in which the swing member 1224 and the fourth connecting rod 1227 (not shown) are collinear.

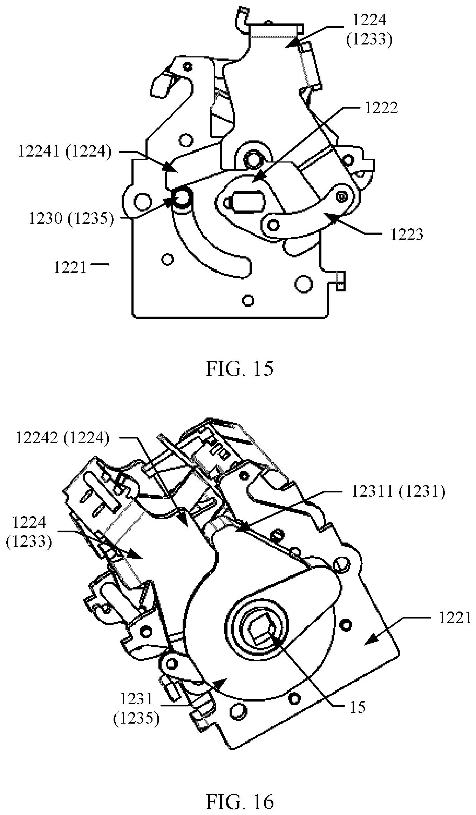

FIG. 15 is still another diagram of a structure of the connecting rod assembly 122 obtained when the operating mechanism 12 is in the dead point position or after the operating mechanism 12 crosses the dead point position according to this application. Different from the structures shown in FIG. 6, FIG. 7, and FIG. 10, the operating mechanism 12 shown in FIG. 15 is not provided with the independent input connecting rod 1233 and the independent output connecting rod 1235, but changes some original connecting rods in the connecting rod assembly 122. The input connecting rod 1233 is the swing member 1224, and the output connecting rod 1235 is the second sliding rod 1230. Specifically, the swing member 1224 includes a protrusion 12241, and the protrusion 12241 is disposed parallel to the side plate 1221. In the process in which the operating mechanism 12 drives the movable contact 131 to be separated from the stationary contact 132, the protrusion 12241 rotates counterclockwise. When the operating mechanism 12 is in the dead point position, or after the operating mechanism 12 crosses the dead point position, the protrusion 12241 of the swing member 1224 is configured to collide with the second sliding rod 1230, to increase the driving force for the second sliding rod 1230, so that the second sliding rod 1230 moves. As the second sliding rod 1230 moves, the output shaft 15 also rotates synchronously, to separate the movable contact 131 from the stationary contact 132. This can avoid the following problem: The output shaft 15 is driven to rotate due to a misoperation (after the operating mechanism 12 is in the switch-on state, a position in which the operating mechanism 12 is in the switch-off state is moved by a specific angle by rotating the handle 11) in actual operation application; consequently, a contact area between the movable contact 131 and the stationary contact 132 is reduced, and a contact resistance between the movable contact 131 and the stationary contact 132 is increased. It should be noted that the connecting rod assembly 122 shown in FIG. 15 includes all the connecting rods other than the independent input connecting rod 1233 and the independent output connecting rod 1235 in the connecting rod assembly 122 shown in FIG. 6, FIG. 7, and FIG. 10, and transmission principles of these connecting rods remain unchanged. In addition, in the process in which the operating mechanism 12 drives the movable contact 131 to be separated from the stationary contact 132, the dead point position is a relative position of the connecting rod assembly 122 in the operating mechanism 12 in a case in which the swing member 1224 and the fourth connecting rod 1227 (not shown) are collinear.

FIG. 16 is yet another diagram of a structure of the connecting rod assembly 122 obtained when the operating mechanism 12 is in the dead point position or after the operating mechanism 12 crosses the dead point position according to this application. Different from the structures shown in FIG. 6, FIG. 7, and FIG. 10, the operating mechanism 12 shown in FIG. 15 is not provided with the independent input connecting rod 1233 and the independent output connecting rod 1235, but changes some original connecting rods in the connecting rod assembly 122. The input connecting rod 1233 is the swing member 1224, and the output connecting rod 1235 is the rotating plate 1231. Specifically, the swing member 1224 includes a protrusion 12242, an edge of the rotating plate 1231 includes a protrusion 12311, and the protrusion 12311 extends in a direction away from the output shaft 15. In the process in which the operating mechanism 12 drives the movable contact 131 to be separated from the stationary contact 132, when the operating mechanism 12 is in the dead point position, or when the operating mechanism 12 is located after the dead point position, the protrusion 12242 of the swing member 1224 is configured to collide with the protrusion 12311 of the rotating plate 1231, to increase driving force for the rotating plate 1231, so that the rotating plate 1231 rotates. As the rotating plate 1231 rotates, the output shaft 15 also rotates synchronously, to separate the movable contact 131 from the stationary contact 132. This can avoid the following problem: The output shaft 15 is driven to rotate due to a misoperation (after the operating mechanism 12 is in the switch-on state, a position in which the operating mechanism 12 is in the switch-off state is moved by a specific angle by rotating the handle 11) in actual operation application; consequently, a contact area between the movable contact 131 and the stationary contact 132 is reduced, and a contact resistance between the movable contact 131 and the stationary contact 132 is increased. It should be noted that the connecting rod assembly 122 shown in FIG. 16 includes all the connecting rods other than the independent input connecting rod 1233 and the independent output connecting rod 1235 in the connecting rod assembly 122 shown in FIG. 6, FIG. 7, and FIG. 10, and transmission principles of these connecting rods remain unchanged. In addition, in the process in which the operating mechanism 12 drives the movable contact 131 to be separated from the stationary contact 132, the dead point position is a relative position of the connecting rod assembly 122 in the operating mechanism 12 in a case in which the swing member 1224 and the fourth connecting rod 1227 (not shown) are collinear.

In actual application, connecting rods that are in the connecting rod assembly 122 and that are located outside the accommodating space enclosed by the two side plates 1221, for example, the first connecting rod 1222, the second connecting rod 1223, and the swing member 1224 may all bear the function of the input connecting rod 1233, and the independent input connecting rod 1233 is not disposed. The second sliding rod 1230 and the rotating plate 1231 may also bear the function of the output connecting rod 1235, and the independent output connecting rod 1235 is not disposed. In the process in which the operating mechanism drives the movable contact 131 to be separated from the stationary contact 132, when the operating mechanism 12 is in the dead point position, or after the operating mechanism 12 crosses the dead point position, any one of the connecting rods that bear the function of the input connecting rod 1233 is configured to collide with the second sliding rod 1230 or the rotating plate 1231, to separate the movable contact 131 from the stationary contact 132. Corresponding combination manners are not listed one by one in this application.

In general, this application provides a direct current switch 10. The direct current switch 10 includes an operating mechanism 12, a handle 11, and a disconnector 13. The operating mechanism 12 includes an input shaft 14, an output shaft 15, and a connecting rod assembly 122, and the connecting rod assembly 122 includes an input connecting rod 1233 and an output connecting rod 1235. The disconnector 13 includes a plurality of stacked sub-switches, and each sub-switch includes a movable contact 131 and a stationary contact 132. The input shaft 14 is fastened to the handle 11, the connecting rod assembly 122 is configured to be in transmission connection to the input shaft 14 and the output shaft 15, and the output shaft 15 is configured to drive the movable contact 131 to rotate. The handle 11 is configured to drive the input shaft 14 to rotate, and the input shaft 14 is configured to drive the input connecting rod 1233 to rotate, so that the input connecting rod 1233 collides with the output connecting rod 1235, and the output connecting rod 1235 drives the output shaft 15 to rotate, to separate the movable contact 131 from the stationary contact 132. In this way, even if rust occurs between the movable contact 131 and the stationary contact 132, and static friction increases, the operating mechanism 12 can still ensure reliable separation between the movable contact 131 and the stationary contact 132. In addition, this application further provides a power converter 100. A structure of the power converter 100 is shown in FIG. 2. The power converter 100 includes any direct current switch 10 provided in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A direct current switch, comprising an operating mechanism, a handle, and a disconnector,
wherein the operating mechanism comprises an input shaft, an output shaft, and a connecting rod assembly, and the connecting rod assembly comprises an input connecting rod and an output connecting rod;
wherein the disconnector comprises a plurality of stacked sub-switches, and each sub-switch comprises a movable contact and a stationary contact;
wherein the input shaft is fastened to the handle, the connecting rod assembly is configured to be in transmission connection to the input shaft and the output shaft, and the output shaft is configured to drive the movable contact to rotate; and
wherein the handle is configured to drive the input shaft to rotate, and the input shaft is configured to drive the input connecting rod to rotate, so that the input connecting rod collides with the output connecting rod, and the output connecting rod drives the output shaft to rotate, to separate the movable contact from the stationary contact.

2. The direct current switch according to claim 1, wherein the input connecting rod is fastened to the input shaft, and the input connecting rod comprises a through hole and a protrusion, wherein
the through hole is configured for the input shaft to penetrate; and
the protrusion is disposed at an edge of the input connecting rod in a radial direction of the input shaft, and the protrusion is configured to collide with the output connecting rod.

3. The direct current switch according to claim 2, wherein the connecting rod assembly further comprises a side plate, a first connecting rod, a second connecting rod, and a swing member, wherein
the first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate.

4. The direct current switch according to claim 3, wherein the connecting rod assembly further comprises a spring, a first sliding rod, a cradle, and a releaser, wherein
one end of the spring is hung on the swing member, the other end of the spring is hung on the first sliding rod, the cradle is rotatably connected to the side plate, the cradle is further in transmission connection to the releaser, and the releaser is configured to release transmission connection to the cradle when receiving a switch-off signal, to separate the movable contact from the stationary contact.

5. The direct current switch according to claim 4, wherein the connecting rod assembly further comprises a third connecting rod, a fourth connecting rod, a fifth connecting rod, a second sliding rod, and a rotating plate, wherein
the third connecting rod is rotatably connected to the first sliding rod, the fourth connecting rod is rotatably connected to the first sliding rod and the cradle, the fifth connecting rod is rotatably connected to the third connecting rod, the second sliding rod penetrates the fifth connecting rod in an axial direction of the output shaft and is fastened to the fifth connecting rod, the second sliding rod is fastened to the rotating plate, and the rotating plate is fastened to the output shaft;
a distance between the protrusion and the input shaft is less than a distance between the second sliding rod and the input shaft; and
the output connecting rod extends in the axial direction of the output shaft and is fastened to the fifth connecting rod, and a distance between the output connecting rod and the input shaft is less than the distance between the second sliding rod and the input shaft.

6. The direct current switch according to claim 1, wherein the input connecting rod is a first connecting rod, and the connecting rod assembly further comprises a side plate, a second connecting rod, and a swing member, wherein
the first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate; and
the first connecting rod comprises a protrusion, and the protrusion is configured to: rotate around the input shaft and collide with the output connecting rod.

7. The direct current switch according to claim 1, wherein the input connecting rod is a swing member, and the connecting rod assembly further comprises a side plate, a first connecting rod, and a second connecting rod, wherein
the first connecting rod is rotatably connected to the input shaft, the second connecting rod is rotatably connected to the first connecting rod, the second connecting rod is rotatably connected to the swing member, the input shaft penetrates the side plate, and the swing member is clamped to the side plate and is configured to swing relative to the side plate; and
the swing member comprises a protrusion, and the protrusion is configured to: swing around a clamping position between the swing member and the side plate and collide with the output connecting rod.

8. The direct current switch according to claim 6 or 7, wherein the connecting rod assembly further comprises a spring, a first sliding rod, a cradle, and a releaser, wherein
one end of the spring is hung on the swing member, the other end of the spring is hung on the first sliding rod, the cradle is rotatably connected to the side plate, the cradle is in transmission connection to the releaser, and the releaser is configured to release transmission connection to the cradle when receiving a switch-off signal, to separate the movable contact from the stationary contact.

9. The direct current switch according to claim 8, wherein the connecting rod assembly further comprises a third connecting rod, a fourth connecting rod, a fifth connecting rod, and a rotating plate, wherein the third connecting rod is rotatably connected to the first sliding rod, the fourth connecting rod is rotatably connected to the first sliding rod and the cradle, the fifth connecting rod is rotatably connected to the third connecting rod, the output connecting rod is a second sliding rod, the second sliding rod penetrates the fifth connecting rod in an axial direction of the output shaft and is fastened to the fifth connecting rod, the second sliding rod is fastened to the rotating plate, and the rotating plate is fastened to the second sliding rod and the output shaft.

10. The direct current switch according to claim 8, wherein the connecting rod assembly further comprises a third connecting rod, a fourth connecting rod, a fifth connecting rod, and a second sliding rod, wherein
the third connecting rod is rotatably connected to the first sliding rod, the fourth connecting rod is rotatably connected to the first sliding rod and the cradle, the fifth connecting rod is rotatably connected to the third connecting rod, the second sliding rod penetrates the fifth connecting rod in an axial direction of the output shaft and is fastened to the fifth connecting rod, the output connecting rod is a rotating plate, the rotating plate is fastened to the second sliding rod, and the rotating plate is fastened to the output shaft.

11. The direct current switch according to any one of claims 5, 9, and 10, wherein the side plate comprises an arc-shaped through hole, and the arc-shaped through hole is configured to accommodate a part of the second sliding rod, for the second sliding rod to slide in the arc-shaped through hole.

12. The direct current switch according to any one of claims 5, 9, and 10, wherein the operating mechanism further comprises a first unlocking rod and a second unlocking rod, the first unlocking rod is fastened to the releaser, the second unlocking rod is clamped to the first unlocking rod, the second unlocking rod is clamped to the cradle, and the releaser is configured to release the first unlocking rod when receiving the switch-off signal, to make the cradle move relative to the side plate and separate the movable contact from the stationary contact.

13. The direct current switch according to any one of claims 1 to 12, wherein the input shaft and the output shaft are coaxial.

14. The direct current switch according to any one of claims 1 to 13, wherein in a process in which the handle drives the operating mechanism to separate the movable contact from the stationary contact, when the operating mechanism is in a dead point position, or after the operating mechanism crosses the dead point position, the input connecting rod is configured to collide with the output connecting rod.

15. A power converter, comprising a direct current switch according to any one of claims 1 to 14, a housing, and a circuit board,
wherein the housing is configured to accommodate the circuit board and a part of the direct current switch; and wherein the direct current switch is disposed on the circuit board, and a handle of the direct current switch is exposed from the housing.
